# EUROPEAN PATENT APPLICATION

(11) **EP 4 742 740 A1**
(43) Date of publication of application: **13.05.2026**
(21) Application number: 24850915.0
(22) Date of filing: 02.08.2024
(51) Int. Cl.: H04W 24/10

(54) **DATA COLLECTION METHOD AND APPARATUS**

(30) Priority: 10.08.2023 CN 202311006929
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Pfenning, Meinig & Partner mbB
(86) International application number: PCT/CN2024/109357
(87) International publication number: WO 2025/031270

(57) **Abstract**

This application provides a data collection method and an apparatus. The method includes: A data collection application function network element sends first information to a network device or a non-access stratum of a terminal device, where the first information is used for requesting a first access stratum data set of the terminal device, the first information includes measurement and reporting configuration information of the first access stratum data set, and the first access stratum data set includes access stratum data that an event consumer application function network element requests to obtain; the data collection application function network element receives second information, where the second information indicates a second access stratum data set, and the second access stratum data set includes all or a part of access stratum data in the first access stratum data set; and the data collection application function network element sends the second information to the event consumer application function network element. Access stratum data of the terminal device can be collected by using the method.

## Description

This application claims priority to Chinese Patent Application No. 202311006929.0, filed with the China National Intellectual Property Administration on August 10, 2023 and entitled "DATA COLLECTION METHOD AND APPARATUS", which is incorporated herein by reference in its entirety.

### TECHNICAL FIELD

This application relates to the communication field, and specifically, to a data collection method and an apparatus.

### BACKGROUND

With improvement of data storage and computing capabilities, an artificial intelligence (artificial intelligence, AI) technology is increasingly used. The AI technology can be used in communication systems such as a new radio (new radio, NR) system, to improve network performance and user experience through intelligent data collection and analysis.

The 3rd generation partnership project (3rd generation partnership project, 3GPP) introduces a plurality of AI application scenarios, such as channel state information (Channel State Information, CSI) feedback enhancement, beam management (beam management, BM), and positioning accuracy enhancement (Positioning accuracy enhancement) using Al.

In the foregoing AI application scenarios, input of an AI model is access stratum (Access Stratum, AS) data of user equipment (User Equipment, UE). How to collect the AS data of the UE and report the AS data to an application layer is an urgent problem to be resolved.

### SUMMARY

This application provides a data collection method and an apparatus. AS data of UE can be collected by using the method.

According to a first aspect, a data collection method is provided. The method may be performed by a data collection application function network element, or may be performed by a chip or a circuit disposed in the data collection application function network element. This is not limited in this application.

The method includes: The data collection application function network element sends first information to a network device or a non-access stratum of a terminal device, where the first information is used for requesting a first access stratum data set of the terminal device, the first information includes measurement and reporting configuration information of the first access stratum data set, and the first access stratum data set includes access stratum data that an event consumer application function network element requests to obtain; the data collection application function network element receives second information, where the second information indicates a second access stratum data set, and the second access stratum data set includes all or a part of access stratum data in the first access stratum data set; and the data collection application function network element sends the second information to the event consumer application function network element.

According to the foregoing solution, the event consumer application function network element may send an access stratum data collection requirement, which is needed for training a model by the event consumer application function network element, as subscription information (namely, the first information) to the data collection application function network element, the data collection application function network element sends the subscription information to the network device or the non-access stratum of the terminal device, the network device or the non-access stratum of the terminal device collects access data and forwards the access data to the data collection application function network element, and finally, the event consumer application function network element obtains a subscribed access stratum data collection result from the data collection application function network element, so that a procedure of collecting an access stratum measurement result by the event consumer application function network element is completed.

With reference to the first aspect, in some implementations of the first aspect, the data collection application network element receives third information from the network device, where the third information indicates data that is in the first access stratum data set and that is accepted by the network device and/or data that is not accepted by the network device.

According to the foregoing solution, after receiving the subscription information sent by the data collection application function network element, the network device may feed back a result of accepting the subscription information to the data collection application function network element.

In a possible implementation, that the first access stratum data set includes the access stratum data that the event consumer application function network element requests to obtain includes: The first access stratum data set includes access stratum data corresponding to at least one event group subscribed to by the event consumer application function network element, each of the at least one event group corresponds to a part of the access stratum data in the first access stratum data set, and the event group includes at least one event; and the first information further includes first identifier ID information and/or second ID information, the first ID information indicates an ID of each of the at least one event group, and the second ID information indicates an ID of the event consumer application function network element.

In a possible implementation, that the third information indicates the data that is in the first access stratum data set and that is accepted by the network device and/or the data that is not accepted by the network device includes: The third information indicates an ID of an event group accepted or not accepted by the network device, or the third information indicates an ID of sub-access stratum data accepted or not accepted by the network device.

In a possible implementation, the third information further indicates a reason why the network device accepts or does not accept specific access stratum data.

In a possible implementation, the data collection application function network element receives fourth information from a provisioning application function network element, where the fourth information includes the measurement and reporting configuration information of the first access stratum data set.

In a possible implementation, the data collection application function network element sends the third information to the event consumer application function network element.

In a possible implementation, the data collection application function network element stores the second access stratum data set based on the second information.

According to a second aspect, a data collection method is provided. The method may be performed by a network device, or may be performed by a chip or a circuit disposed in the network device. This is not limited in this application.

The method includes: The network device receives first information from a data collection application function network element, where the first information is used for requesting a first access stratum data set of a terminal device, the first information includes measurement and reporting configuration information of the first access stratum data set, and the first access stratum data set includes access stratum data that an event consumer application function network element requests to obtain; the network device sends first indication information to an access stratum of the terminal device, where the first indication information indicates that the access stratum of the terminal device is to measure a second access stratum data set, the second access stratum data set includes all or a part of access stratum data in the first access stratum data set, and the first indication information includes measurement and reporting configuration information of the second access stratum data set; the network device receives second information from the access stratum of the terminal device, where the second information indicates the second access stratum data set; and the network device sends the second information to the data collection application function network element.

According to the foregoing solution, the event consumer application function network element may send an access stratum data collection requirement, which is needed for training a model by the event consumer application function network element, as subscription information to the data collection application function network element, the data collection application function network element sends the subscription information to the network device, the network device collects access data and forwards the access data to the data collection application function network element, and finally, the event consumer application function network element obtains a subscribed access stratum data collection result from the data collection application function network element, so that a procedure of collecting an access stratum measurement result by the event consumer application function network element is completed.

With reference to the second aspect, in some implementations of the second aspect, the network device sends third information to the data collection application function network element, where the third information indicates data that is in the first access stratum data set and that is accepted by the network device and/or data that is not accepted by the network device.

According to the foregoing solution, after receiving the subscription information sent by the data collection application function network element, the network device may feed back a result of accepting the subscription information to the data collection application function network element.

In a possible implementation, the second access stratum data set includes access stratum data that is in the first access stratum data set and that is accepted by the network device.

In a possible implementation, that the first access stratum data set includes the access stratum data that the event consumer application function network element requests to obtain includes: The first access stratum data set includes access stratum data corresponding to at least one event group subscribed to by the event consumer application function network element, each of the at least one event group corresponds to a part of the access stratum data in the first access stratum data set, and the event group includes at least one event; and the first information further includes first identifier ID information and/or second ID information, the first ID information indicates an ID of each of the at least one event group, and the second ID information indicates an ID of the event consumer application function network element.

In a possible implementation, that the third information indicates the data that is in the first access stratum data set and that is accepted by the network device and/or the data that is not accepted by the network device includes: The third information indicates an ID of an event group accepted or not accepted by the network device, or the third information indicates an ID of sub-access stratum data accepted or not accepted by the network device; and the third information further indicates a reason why the network device accepts or does not accept specific access stratum data.

In a possible implementation, the network device sends second indication information to the access stratum of the terminal device, where the second indication information includes the measurement and reporting configuration information of the first access stratum data set.

In a possible implementation, the first indication information further indicates that a measurement requirement for the second access stratum data set is from the data collection application function network element.

In a possible implementation, the first indication information further includes at least one of the following information: the first ID information, the second ID information, and AI model training function indication information.

According to a third aspect, a data collection method is provided. The method may be performed by a terminal device, or may be performed by a chip or a circuit disposed in the terminal device. This is not limited in this application.

The method includes: A non-access stratum of the terminal device receives first information from a data collection application function network element, where the first information is used for requesting a first access stratum data set of the terminal device, the first information includes measurement and reporting configuration information of the first access stratum data set, and the first access stratum data set includes access stratum data that an event consumer application function network element requests to obtain; the non-access stratum of the terminal device sends first request information to an access stratum of the terminal device, where the first request information is used for requesting the first access stratum data set; the access stratum of the terminal device sends second information to the non-access stratum of the terminal device, where the second information indicates a second access stratum data set, and the second access stratum data set includes all or a part of access stratum data in the first access stratum data set; and the non-access stratum of the terminal device sends the second information to the data collection application function network element.

According to the foregoing solution, the event consumer application function network element may send an access stratum data collection requirement, which is needed for training a model by the event consumer application function network element, as subscription information to the data collection application function network element, the data collection application function network element sends the subscription information to the non-access stratum of the terminal device, the non-access stratum of the terminal device collects access data and forwards the access data to the data collection application function network element, and finally, the event consumer application function network element obtains a subscribed access stratum data collection result from the data collection application function network element, so that a procedure of collecting an access stratum measurement result by the event consumer application function network element is completed.

With reference to the third aspect, in some implementations of the third aspect, the access stratum of the terminal device determines not to send access stratum data in the first access stratum data set other than the second access stratum data set to the non-access stratum of the terminal device.

In a possible implementation, the access stratum of the terminal device sends reason indication information to the non-access stratum of the terminal device, where the reason indication information indicates a reason why the access stratum of the terminal device does not send the first access stratum data set to the non-access stratum of the terminal device.

In a possible implementation, that the first access stratum data set includes the access stratum data that the event consumer application function network element requests to obtain includes: The first access stratum data set includes access stratum data corresponding to at least one event group subscribed to by the event consumer application function network element, each of the at least one event group corresponds to a part of the access stratum data in the first access stratum data set, and the event group includes at least one event; and the first information further includes first identifier ID information and/or second ID information, the first ID information indicates an ID of each of the at least one event group, and the second ID information indicates an ID of the event consumer application function network element.

In a possible implementation, the first request information further includes at least one of the following information: the first ID information, the second ID information, and AI model training function indication information.

In a possible implementation, the non-access stratum of the terminal device sends the reason indication information to the data collection application function network element.

In a possible implementation, the access stratum of the terminal device receives second indication information from a network device, where the second indication information includes the measurement and reporting configuration information of the first access stratum data set.

According to a fourth aspect, a data collection apparatus is provided. The apparatus includes: a sending unit, configured to send first information to a network device or a non-access stratum of a terminal device, where the first information is used for requesting a first access stratum data set of the terminal device, the first information includes measurement and reporting configuration information of the first access stratum data set, and the first access stratum data set includes access stratum data that an event consumer application function network element requests to obtain; and a receiving unit, configured to receive second information, where the second information indicates a second access stratum data set, and the second access stratum data set includes all or a part of access stratum data in the first access stratum data set. The sending unit is further configured to send the second information to the event consumer application function network element.

In a possible implementation, the receiving unit is further configured to receive third information from the network device, where the third information indicates data that is in the first access stratum data set and that is accepted by the network device and/or data that is not accepted by the network device.

In a possible implementation, that the first access stratum data set includes the access stratum data that the event consumer application function network element requests to obtain includes: The first access stratum data set includes access stratum data corresponding to at least one event group subscribed to by the event consumer application function network element, each of the at least one event group corresponds to a part of the access stratum data in the first access stratum data set, and the event group includes at least one event; and the first information further includes first identifier ID information and/or second ID information, the first ID information indicates an ID of each of the at least one event group, and the second ID information indicates an ID of the event consumer application function network element.

In a possible implementation, that the third information indicates the data that is in the first access stratum data set and that is accepted by the network device and/or the data that is not accepted by the network device includes: The third information indicates an ID of an event group accepted or not accepted by the network device, or the third information indicates an ID of sub-access stratum data accepted or not accepted by the network device.

In a possible implementation, the third information further indicates a reason why the network device accepts or does not accept specific access stratum data.

In a possible implementation, the receiving unit is further configured to receive fourth information from a provisioning application function network element, where the fourth information includes the measurement and reporting configuration information of the first access stratum data set.

In a possible implementation, the sending unit is further configured to send the third information to the event consumer application function network element.

In a possible implementation, the apparatus further includes: a processing unit, configured to store the second access stratum data set based on the second information.

According to a fifth aspect, a data collection apparatus is provided. The apparatus includes: a receiving unit, configured to receive first information from a data collection application function network element, where the first information is used for requesting a first access stratum data set of a terminal device, the first information includes measurement and reporting configuration information of the first access stratum data set, and the first access stratum data set includes access stratum data that an event consumer application function network element requests to obtain; and a sending unit, configured to send first indication information to an access stratum of the terminal device, where the first indication information indicates that the access stratum of the terminal device is to measure a second access stratum data set, the second access stratum data set includes all or a part of access stratum data in the first access stratum data set, and the first indication information includes measurement and reporting configuration information of the second access stratum data set. The receiving unit is further configured to receive second information from the access stratum of the terminal device, where the second information indicates the second access stratum data set; and the sending unit is further configured to send the second information to the data collection application function network element.

In a possible implementation, the sending unit is further configured to send third information to the data collection application function network element, where the third information indicates data that is in the first access stratum data set and that is accepted by the apparatus and/or data that is not accepted by the apparatus.

In a possible implementation, the second access stratum data set includes access stratum data that is in the first access stratum data set and that is accepted by the apparatus.

In a possible implementation, that the first access stratum data set includes the access stratum data that the event consumer application function network element requests to obtain includes: The first access stratum data set includes access stratum data corresponding to at least one event group subscribed to by the event consumer application function network element, each of the at least one event group corresponds to a part of the access stratum data in the first access stratum data set, and the event group includes at least one event; and the first information further includes first identifier ID information and/or second ID information, the first ID information indicates an ID of each of the at least one event group, and the second ID information indicates an ID of the event consumer application function network element.

In a possible implementation, that the third information indicates data that is in the first access stratum data set and that is accepted by the apparatus and/or data that is not accepted by the apparatus includes: The third information indicates an ID of an event group accepted or not accepted by the apparatus, or the third information indicates an ID of sub-access stratum data accepted or not accepted by the apparatus; and the third information further indicates a reason why the apparatus accepts or does not accept specific access stratum data.

In a possible implementation, the sending unit is further configured to send second indication information to the access stratum of the terminal device, where the second indication information includes the measurement and reporting configuration information of the first access stratum data set.

In a possible implementation, the first indication information further indicates that a measurement requirement for the second access stratum data set is from the data collection application function network element.

In a possible implementation, the first indication information further includes at least one of the following information: the first ID information, the second ID information, and AI model training function indication information.

According to a sixth aspect, a data collection apparatus is provided. The apparatus includes: a receiving unit, configured for a non-access stratum of the apparatus to receive first information from a data collection application function network element, where the first information is used for requesting a first access stratum data set of the apparatus, the first information includes measurement and reporting configuration information of the first access stratum data set, and the first access stratum data set includes access stratum data that an event consumer application function network element requests to obtain; and a sending unit, configured for the non-access stratum of the apparatus to send first request information to an access stratum of the apparatus, where the first request information is used for requesting the first access stratum data set. The sending unit is further configured for the access stratum of the apparatus to send second information to the non-access stratum of the apparatus, where the second information indicates a second access stratum data set, and the second access stratum data set includes all or a part of access stratum data in the first access stratum data set; and the sending unit is further configured for the non-access stratum of the apparatus to send the second information to the data collection application function network element.

In a possible implementation, the apparatus further includes: a processing unit, configured for the access stratum of the apparatus to determine not to send access stratum data in the first access stratum data set other than the second access stratum data set to the non-access stratum of the apparatus.

In a possible implementation, the sending unit is further configured for the access stratum of the apparatus to send reason indication information to the non-access stratum of the apparatus, where the reason indication information indicates a reason why the access stratum of the apparatus does not send the first access stratum data set to the non-access stratum of the apparatus.

In a possible implementation, that the first access stratum data set includes the access stratum data that the event consumer application function network element requests to obtain includes: The first access stratum data set includes access stratum data corresponding to at least one event group subscribed to by the event consumer application function network element, each of the at least one event group corresponds to a part of the access stratum data in the first access stratum data set, and the event group includes at least one event; and the first information further includes first identifier ID information and/or second ID information, the first ID information indicates an ID of each of the at least one event group, and the second ID information indicates an ID of the event consumer application function network element.

In a possible implementation, the first request information further includes at least one of the following information: the first ID information, the second ID information, and AI model training function indication information.

In a possible implementation, the sending unit is further configured for the non-access stratum of the apparatus to send the reason indication information to the data collection application function network element.

In a possible implementation, the receiving unit is further configured for the access stratum of the apparatus to receive second indication information from a network device, where the second indication information includes the measurement and reporting configuration information of the first access stratum data set.

According to a seventh aspect, a wireless communication apparatus is provided. The apparatus includes modules or units configured to perform the method according to any one of the first aspect or the possible implementations of the first aspect.

According to an eighth aspect, a wireless communication apparatus is provided. The apparatus includes modules or units configured to perform the method according to any one of the second aspect or the possible implementations of the second aspect.

According to a ninth aspect, a wireless communication apparatus is provided. The apparatus includes modules or units configured to perform the method according to any one of the third aspect or the possible implementations of the third aspect.

According to a tenth aspect, a communication device is provided and includes a processor. The processor is coupled to a storage, and may be configured to perform the method according to the first aspect and the possible implementations of the first aspect, or the second aspect and the possible implementations of the second aspect, or the third aspect and the possible implementations of the third aspect. In a possible implementation, the communication device further includes the storage. In a possible implementation, the communication device further includes a communication interface, and the processor is coupled to the communication interface. In a possible implementation, the communication device further includes a communication interface, and the processor is coupled to the communication interface.

In an implementation, the communication device is a terminal device. When the communication device is the terminal device, the communication interface may be a transceiver or an input/output interface. In a possible implementation, the transceiver may be a transceiver circuit. In a possible implementation, the input/output interface may be an input/output circuit.

In another implementation, the communication device is a network device. When the communication device is the network device, the communication interface may be a transceiver or an input/output interface. In a possible implementation, the transceiver may be a transceiver circuit. In a possible implementation, the input/output interface may be an input/output circuit.

In another implementation, the communication device is a data collection application function network element. When the communication device is the data collection application function network element, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eleventh aspect, a communication apparatus is provided. The apparatus includes an input circuit, an output circuit, and a processing circuit. The processing circuit is configured to: receive a signal through the input circuit, and transmit a signal through the output circuit, to implement the method according to any one of the first aspect to the third aspect and the possible implementations of the first aspect to the third aspect.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal output by the output circuit may be output to and transmitted by, for example, but not limited to, a transmitter. The input circuit and the output circuit may be different circuits, or may be a same circuit, and in this case, the circuit is used as the input circuit and the output circuit respectively at different moments. Specific implementations of the processor and the various circuits are not limited in embodiments of this application.

According to a twelfth aspect, a processing apparatus is provided. The apparatus includes a processor and a storage. The processor is configured to read instructions stored in the storage, and may receive a signal through a receiver, and transmit a signal through a transmitter, to perform the method according to any one of the first aspect to the third aspect and the possible implementations of the first aspect to the third aspect.

In a possible implementation, there are one or more processors, and there are one or more storages.

In a possible implementation, the storage and the processor may be integrated together, or the storage and the processor are disposed separately.

In a specific implementation process, the storage may be a non-transitory (non-transitory) memory, for example, a read-only memory (read-only memory, ROM). The storage and the processor may be integrated into one chip, or may be separately disposed on different chips. A type of the storage and a manner in which the storage and the processor are disposed are not limited in embodiments of this application.

It should be understood that, a related data exchange process, for example, sending of indication information may be a process of outputting the indication information from the processor, and receiving of capability information may be a process of receiving and inputting the capability information by the processor. Specifically, data that is processed and output may be output to the transmitter, and input data received by the processor may be from the receiver. The transmitter and the receiver may be collectively referred to as a transceiver.

The processor in the foregoing aspect may be a chip, and the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the storage. The storage may be integrated into the processor, or may be located outside the processor and exist independently.

According to a thirteenth aspect, a computer program product is provided. The computer program product includes a computer program (which may also be referred to as code or instructions). When the computer program is run, a computer is caused to perform the method according to any one of the first aspect to the third aspect and the possible implementations of the first aspect to the third aspect.

According to a fourteenth aspect, a computer-readable medium is provided. The computer-readable medium stores a computer program (which may also be referred to as code or instructions). When the computer program is run on a computer, the computer is caused to perform the method according to any one of the first aspect to the third aspect and the possible implementations of the first aspect to the third aspect.

According to a fifteenth aspect, a chip system is provided. The chip system includes a storage and a processor. The storage is configured to store a computer program. The processor is configured to invoke the computer program from the storage and run the computer program, to cause a communication device on which the chip system is installed to perform the method according to any one of the first aspect to the third aspect and the possible implementations of the first aspect to the third aspect.

The chip system may include an input circuit or interface configured to send information or data, and an output circuit or interface configured to receive information or data.

According to a sixteenth aspect, a communication system is provided. The communication system includes at least one of the foregoing data collection application function network element, network device, and terminal device.

### BRIEF DESCRIPTION OF DRAWINGS

FIG. 1 is a diagram of an example of a communication system to which this application is applicable;
FIG. 2 is a diagram of an architecture of an access network device according to an embodiment of this application;
FIG. 3 is a diagram of an AI application framework according to an embodiment of this application;
FIG. 4 is a diagram of another AI application framework according to an embodiment of this application;
FIG. 5 is a schematic flowchart of AI model lifecycle management according to an embodiment of this application;
FIG. 6 is a schematic flowchart of a data collection method according to an embodiment of this application;
FIG. 7 is a schematic flowchart of another data collection method according to an embodiment of this application;
FIG. 8 is a schematic flowchart of still another data collection method according to an embodiment of this application;
FIG. 9 is a block diagram of a communication apparatus according to an embodiment of this application;
FIG. 10 is a block diagram of a communication apparatus according to an embodiment of this application; and
FIG. 11 is a block diagram of a chip system according to an embodiment of this application.

### DESCRIPTION OF EMBODIMENTS

The following describes technical solutions of this application with reference to the accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a wireless fidelity (wireless fidelity, Wi-Fi) system, a device-to-device (device-to-device, D2D) communication system, a vehicle-to-everything (vehicle-to-everything, V2X) communication system, a universal mobile telecommunications system (Universal Mobile Telecommunications System, UMTS), a worldwide interoperability for microwave access (Worldwide Interoperability for Microwave Access, WiMAX) communication system, a machine-to-machine (machine-to-machine, M2M) communication system, a machine type communication (machine type communication, MTC) system, an internet of things (internet of things, IoT) communication system, a non-terrestrial network (non-terrestrial network, NTN) system, a 5th generation (5th Generation, 5G) mobile communication system, a 6th generation (6th generation, 6G) mobile communication system, a new radio (New Radio, NR) system, or a future wireless communication system.

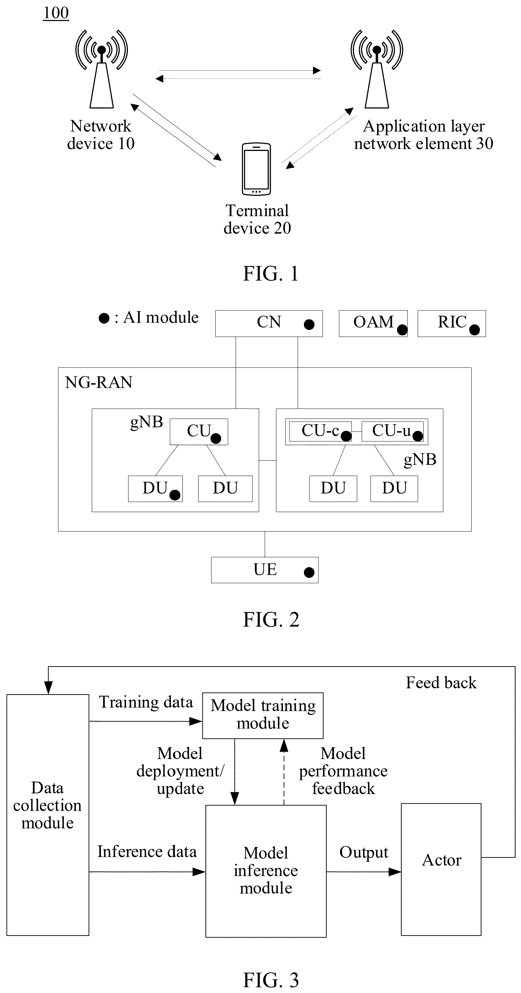

FIG. 1 is a diagram of a communication system 100 according to an embodiment of this application. As shown in FIG. 1, the communication system 100 includes a network device 10, a terminal device 20, and an application layer network element 30. In the communication system, the terminal device 20 may send uplink data/signal/information to the network device 10, and the network device 10 may send downlink data/signal/information to the terminal device 20. Optionally, data/signal/information may be transmitted between the network device 10 and the application layer network element 30. Optionally, data/signal/information may be transmitted between the terminal device 20 and the application layer network element 30.

A communication method provided in embodiments of this application may further relate to a device or a transmission node that is not shown in FIG. 1. This is not limited in embodiments of this application.

The communication system used in embodiments of this application is merely an example for description, and the communication system applicable to embodiments of this application is not limited thereto. Any communication system that can implement functions of the foregoing devices is applicable to embodiments of this application.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and that need to work with other devices such as smartphones, for example, various smart bands or smart jewelry for monitoring physical signs.

In addition, the terminal device may alternatively be a terminal device in an internet of things (internet of things, IoT) system. An IoT is an important part of future development of information technologies. A main technical feature of the IoT is to connect an object to a network by using a communication technology, to implement an intelligent network for human-machine interconnection and thing-thing interconnection.

It should be understood that a specific form of the terminal device is not limited in this application.

The network device may be a device in a wireless network, and may also be referred to as an operator device in this application. For example, the network device may be a device that is deployed in the wireless network and that provides a wireless communication function for the terminal device. For example, the network device may be a radio access network (radio access network, RAN) node that connects the terminal device to the wireless network. A RAN may be connected to a core network (for example, a long term evolution (long term evolution, LTE) core network, or a 5G core network).

The network device in embodiments of this application may be an access network device, including but not limited to various base stations such as a next generation NodeB (gNodeB, gNB), an evolved NodeB (evolved NodeB, eNB), or a base station device in a future evolved communication system; or may be a server, a wearable device, a vehicle-mounted device, a wireless relay node, a wireless backhaul node, a transmission point (transmission point, TP), or a transmission reception point (transmission reception point, TRP); or may be one antenna panel or a group of antenna panels (including a plurality of antenna panels) of a base station; or may be a network node that forms a base station, for example, a baseband unit (BBU) or a distributed unit (distributed unit, DU). The base station may be a macro base station, a micro base station, a pico base station, a small cell, a relay station, a balloon station, or the like.

The network device in embodiments of this application may alternatively be a core network device, including but not limited to: an access and mobility management function (access and mobility management function, AMF) network element, a session management function (session management function, SMF) network element, a user plane function (user plane function, UPF) network element, a policy control function (policy control function, PCF) network element, a unified data management function UDM network element, or the like.

The application layer network element is a network device that is responsible for processing an application layer protocol in a computer network, including but not limited to: a data collection application function (Data Collection AF, DCAF) network element, a provisioning application function (provisioning AF, PAF) network element, and an event consumer application function (Event Consumer AF, ECAF) network element.

It may be understood that all or a part of functions of the network device or the terminal device in this application may alternatively be implemented by using a software function running on hardware, or may be implemented by using an instantiated virtualization function on a platform (for example, a cloud platform).

FIG. 2 is a diagram of an architecture of an access network device according to an embodiment of this application. As shown in FIG. 2, the access network device in embodiments of this application may use a split architecture including a central unit (central unit, CU) and a distributed unit (distributed unit, DU). It may be understood that the network device is divided into the CU and the DU from the perspective of a logical function. The CU and the DU may be physically separated or deployed together. A plurality of DUs may share one CU. One DU may alternatively be connected to a plurality of CUs (not shown in FIG. 2). The CU and the DU may be connected through an interface, for example, an F1 interface. The CU and the DU may be divided based on protocol layers of a wireless network. In a possible division manner, the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that processing function division of the CU and the DU based on the protocol layers is merely an example, and division of the CU and the DU may alternatively be performed in another manner. For example, the CU or the DU may be divided to have functions of more protocol layers than those in the foregoing division manner. For example, the CU or the DU may alternatively be divided to have some processing functions of protocol layers in the foregoing division manner.

In a design, some functions of an RLC layer and functions of a protocol layer above the RLC layer are set on the CU, and remaining functions of the RLC layer and functions of a protocol layer below the RLC layer are set on the DU.

In another design, division of functions of the CU or the DU may alternatively be performed based on a service type or another system requirement. For example, division is performed based on a delay. Functions whose processing time meets a delay requirement are set on the DU for implementation, and functions whose processing time does not meet the delay requirement are set on the CU for implementation.

In another design, the CU may alternatively have one or more functions of a core network. One or more CUs may be disposed together or separately. For example, the CU may be disposed on a network side for ease of centralized management. The DU may have a plurality of radio frequency functions, or the radio frequency functions may be disposed remotely.

The functions of the CU may be implemented by one entity or different entities. For example, the functions of the CU may be further divided. For example, a control plane (control plane, CP) and a user plane (user plane, UP) are separated, namely, a CU control plane (CU-CP) and a CU user plane (CU-UP). The CU control plane, namely, the CU-CP, may further include an architecture in which the CU-CP is further divided. To be specific, the CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In different systems, the CU (including the CU-CP and the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. This is not limited in this application.

An AI module is a module having a machine learning computing capability. As shown in FIG. 2, in a wireless communication system, the AI module may be located in operations, administration and maintenance (operations, administration and maintenance, OAM), or may be located in a gNB (for example, if the gNB uses a split architecture, the AI module may be located in a CU/DU), or may be located in a terminal device, or may independently function as a network element entity, for example, a RAN intelligent controller (RAN Intelligent Controller, RIC). A main function of the AI module in the wireless communication system is to perform a series of AI computation such as model establishment, training approximation, and reinforcement learning based on input data (where in the wireless communication system, the input data is generally network running data provided by the access network device or monitored by the OAM, for example, network load, channel quality, or a user plane data transmission status provided by the core network). A trained model provided by the AI module has a prediction function for a network change on a RAN side, and may be used for load prediction, terminal device path prediction, CSI prediction, optimal beam prediction, positioning prediction, and the like. In addition, the AI module may further perform policy inference from perspectives such as network energy saving and mobility optimization based on a prediction result of RAN network performance by the trained model, to obtain an appropriate and efficient energy saving policy, mobility optimization policy, and the like. When the AI model is located in the CU, and a CP and a UP of the CU are separated, the CP may be responsible for receiving the AI model and performing subsequent AI inference and policy generation functions. When the CU-CP is further divided into a CU-CP 1 and a CU-CP 2, the CU-CP 1 may be responsible for receiving the AI model and performing a subsequent inference function of the AI model, and generating specific interaction signaling, and the CU-CP 2 sends the signaling. When the AI module is located in the OAM, a current northbound interface may be reused for communication between the AI module and the gNB on the RAN side. When the AI module is located in the gNB or the CU, a current interface, for example, F1, Xn, and Uu, may be reused. When the AI module independently functions as a network entity, a communication link, for example, a wired link or a radio link, to the OAM, the RAN side, or the like needs to be reestablished.

FIG. 3 is a diagram of an AI application framework according to an embodiment of this application. As shown in FIG. 3, the AI application framework includes a data collection module, a model training module, a model inference module, and an actor (Actor).

The model training module and the model inference module are examples of an AI module. For example, the network device and the terminal device shown in FIG. 1, and the CU, the DU, or another management entity of the gNB shown in FIG. 2 may input data to the data collection module. The data collection module may be used as a database for AI model training and data analysis and inference. The model training module analyzes training data that is output by the data collection module, provides an available AI model, and deploys the obtained AI model in the model inference module. The model inference module provides, for network running based on inference data that is output by the data collection module, appropriate prediction based on the AI model (obtained by the model training module through training), and feeds back performance data of the AI model to the model training module. Subsequently, the model training module continues to train the model based on the performance data that is fed back, and notifies the model inference module of an updated AI model. Alternatively, the model inference module indicates a network to perform policy adjustment based on the inference data that is output by the data collection module and the AI model. Related policy adjustment is planned by the actor in a unified manner, and policies are sent to a plurality of network entities for running. In addition, after a related policy is applied, specific performance of the network is fed back to the data collection module for storage.

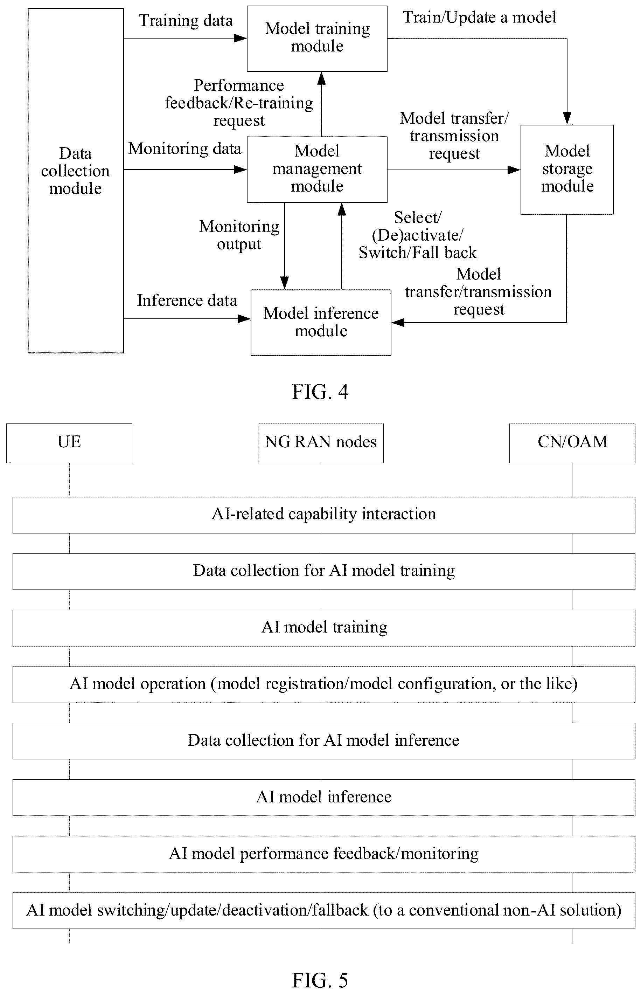

FIG. 4 is a diagram of another AI application framework according to an embodiment of this application. As shown in FIG. 4, the framework includes a data collection module, a model training module, a model management module, a model inference module, and a model storage module.

The model management module interacts with and manages other modules, and the model storage module is configured to store and manage an AI model.

FIG. 5 is a schematic flowchart of AI model lifecycle management (Lifecycle Management, LCM) according to an embodiment of this application.

For different use cases, there may be different overall LCM signaling procedures. A procedure shown in FIG. 5 is merely an example. A specific LCM procedure is not limited in this application.

The 3rd generation partnership project (3rd generation partnership project, 3GPP) introduces a plurality of AI application scenarios on a RAN side. AI application on the RAN side includes but is not limited to the following application scenarios: energy saving (energy saving), load balancing (load balancing), mobility optimization (mobility optimization), channel state information-reference signal (channel state information-reference signal, CSI-RS) feedback enhancement, beam management enhancement (beam management enhancement, BME), positioning enhancement, and the like. These application scenarios may also be referred to as AI use cases (use cases).

For example, AI may be used for CSI feedback enhancement. CSI is a channel attribute of a communication link. UE reports downlink channel quality information to a gNB, so that the base station selects a more appropriate modulation and coding scheme (Modulation and Coding Scheme, MCS) for the UE. Based on a latest progress of a RAN1 meeting, two AI-based sub-use cases, namely, CSI compression and CSI prediction (with a low priority), are approved. CSI compression is based on a two-sided model (where an encoder (and a quantizer) on a UE side is configured to compress CSI, a decoder (and a dequantizer) on a gNB side is configured to decompress the CSI, and an AI-based encoder and decoder may be implemented by using AI models such as a convolutional neural network (Convolutional Neural Network, CNN) and an AI model (Transformer) whose model training speed is increased by using an attention mechanism).

For example, AI may be further used for beam management (beam management, BM), and BM is mainly to discover a strongest transmit/receive beam pair (beam pair). AI/ML-based sparse beam prediction aims to improve accuracy of optimal beam prediction. In a training phase, a network scans all possible beams, and then the network needs to notify the UE of a transmit beam pattern. When model training is completed, the network needs to scan only a small part of beams, and then the UE feeds back top K narrow beams (for example, K beams with best receive power) obtained through inference to the network.

For example, AI may be further used for positioning accuracy enhancement (Positioning accuracy enhancement). In R17, LOS/NLOS indication reporting is supported, to improve positioning accuracy. AI/ML-based LOS/NLOS identification can improve positioning accuracy with a small quantity of transmission reception point (Transmission Reception Point, TRP) antennas. In an indoor scenario (a heavy NLOS scenario), there may be an insufficient quantity of line-of-sight paths. As a result, a conventional approach cannot work well. Therefore, AI-based positioning can improve positioning accuracy in the indoor scenario.

In the foregoing AI application scenarios, input of the AI model is access stratum data. For example, in a CSI compression scenario, input of the model is a CSI-RS measurement result including CSI reporting at an access stratum. How to collect the AS data of the UE and report the AS data to an application layer is an urgent problem to be resolved.

This application provides a plurality of AS data collection methods. When an AS stratum and an APP layer of UE collect data independently, AS data of the UE can be collected.

It should be understood that descriptions of specific scenarios in embodiments of this application are merely examples. In addition to the foregoing described application scenarios, the methods provided in embodiments of this application are also applicable to an application scenario in which a similar problem exists.

In the descriptions of embodiments of this application, unless otherwise stated, "a plurality" or "a plurality of items" means two or more. In addition, "at least one" may be replaced with "one or more".

Ordinal numbers such as "first" and "second" mentioned in embodiments of this application are intended to distinguish between a plurality of objects, but are not intended to limit sizes, content, a sequence, a time sequence, priorities, importance, or the like of the plurality of objects. For example, first indication information and second indication information may be same information, or may be different information. In addition, these names do not indicate that the two messages have different content, sizes, application scenarios, transmit ends/receive ends, priorities, importance, or the like. In addition, step numbers in embodiments described in this application are merely intended to distinguish between different steps, but are not intended to limit a sequence of the steps.

In this application, the terms "include" and "have" and any other variants thereof are intended to cover a non-exclusive inclusion. For example, a process, method, system, product, or device that includes a list of steps or units is not necessarily limited to those clearly listed steps or units, but may include other steps or units that are not clearly listed or inherent to the process, method, product, or device.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

It should be understood that names of all nodes and messages in this application are merely names specified for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

The following describes in detail a plurality of methods provided in embodiments of this application with reference to the accompanying drawings.

It should be understood that the step numbers in embodiments of this application are merely used for description, and do not limit a sequence of steps.

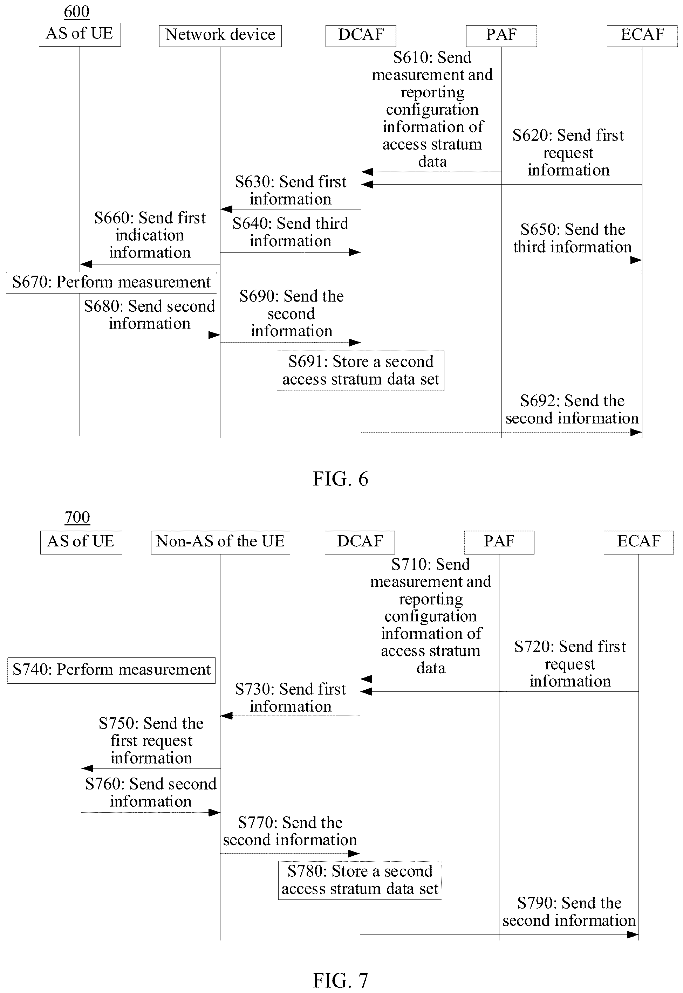

FIG. 6 shows a data collection method 600 according to this application. AS data of UE is collected by using the method. The method in FIG. 6 includes at least a part of the following content.

S610: A PAF sends measurement and reporting configuration information of access stratum data to a DCAF.

S620: An event consumer application function network element (ECAF) sends subscription request information (that is, an example of first request information) to the DCAF.

S630: The DCAF sends first information to a network device, where the first information is used for requesting a first access stratum data set of the UE.

S640: The network device sends third information to the DCAF, where the third information indicates data that is in the first access stratum data set and that is accepted by the network device and/or data that is not accepted by the network device.

S650: The DCAF sends the third information to the event consumer application function network element.

S660: The network device sends first indication information to an AS stratum of the UE, where the first indication information indicates that the AS stratum of the UE is to measure a second access stratum data set.

S670: The AS stratum of the UE performs measurement.

S680: The AS stratum of the UE sends second information to the network device, where the second information indicates the second access stratum data set.

S690: The network device sends the second information to the DCAF.

S691: The DCAF stores the second access stratum data set.

S692: The DCAF sends the second information to the event consumer application function network element.

According to the foregoing solution, the ECAF may send an AS stratum data collection requirement, which is needed for training a model by the ECAF, as subscription information to the DCAF, the DCAF sends the subscription information to the network device, the network device collects AS data and forwards the AS data to the DCAF, and finally, the ECAF obtains a subscribed AS stratum data collection result from the DCAF, so that a procedure of collecting an AS stratum measurement result by the ECAF is completed.

The following describes S610 to S692 in detail.

In S610, the PAF sends the measurement and reporting configuration information (that is, an example of fourth information) of the access stratum data to the DCAF.

It should be understood that the PAF may send, to the DCAF, measurement and reporting configuration information of UE-related data, including the measurement and reporting configuration information of the access stratum data of the UE.

In an implementation, the PAF may indicate, to the DCAF (for example, by sending indication information, or by including the indication information in the measurement and reporting configuration information of the UE-related data), data that is in the UE-related data and that is access stratum-related data.

It should be understood that the measurement and reporting configuration information of the access stratum data includes measurement and reporting configuration information of the first access stratum data set.

Specifically, the measurement and reporting configuration information may include: data that needs to be collected, configuration of data collection (for example, a sampling frequency and geographic constraints for collection), a reporting frequency and format of collected data, and how the DCAF processes the data and sends the data to a corresponding subscriber (also referred to as an event consumer).

In an implementation, collected data information may include one or more of the following: information indicating an artificial intelligence AI function corresponding to access stratum data (where the AI function may include, but is not limited to, one or more functions of CSI compression, CSI prediction, BM, and positioning), information about a target frequency measured by the UE, information about a reference signal type measured by the UE (indicating, for example, an SSB and/or CSI), information about a channel quality type measured by the UE (for example, RSRP/RSRQ/an SINR), indication information collected and reported by a physical layer L1 and/or a network layer L3 of the UE, information about a scenario in which access stratum data needs to be collected (for example, a specific region, a cell, or cell configuration), and information about a maximum quantity of reported beams (indicating, for example, a measurement result of four/six/several beams).

In S620, the ECAF sends the subscription request information to the DCAF.

It should be understood that there may be one or more ECAFs. That the ECAF sends the subscription request information to the DCAF may also be understood as that the one or more ECAFs separately send subscription request information to the DCAF.

It should be understood that the subscription request information is used for requesting the first access stratum data set, where the first access stratum data set includes at least one piece of sub-access stratum data.

In an implementation, the subscription request information includes target UE information (for example, a UE ID, an IP address of the UE, or an ID of a UE cluster, and any identifier information that may indicate specific UE) corresponding to measurement, a measurement event ID (which may be an event ID or a group of event IDs), and configuration of measurement result reporting (event-based/periodic reporting, reporting duration, a maximum quantity of reporting times, and the like).

It should be understood that, in the subscription request information, the ECAF may further send model-related subscription information to the DCAF, to request a measurement result needed for locally training a model by the ECAF. For example, the ECAF may indicate that there is a model to be trained locally, and include function information corresponding to the model to be trained by the ECAF (for example, measurement information corresponding to a CSI compression function).

In S630, the DCAF sends the first information to the network device, where the first information is used for requesting the first access stratum data set of the UE, or the first information indicates a measurement requirement for the first access stratum data set.

It should be understood that the first access stratum data set is a set of access stratum data requested by at least one ECAF based on the subscription request information. The first access stratum data set includes at least one access stratum data group, and each access stratum data group includes at least one piece of sub-access stratum data.

In an implementation, the DCAF identifies measurement and reporting configuration related to AS data collection based on measurement and reporting configuration information of UE-related data obtained in step S610, and sends, to the network device, the measurement and reporting configuration related to AS data collection.

In another implementation, the DCAF may determine, based on the indication information sent by the PAF, data that is in the UE-related data and that is access stratum-related data, and send measurement and reporting configuration of the access stratum-related data to the network device.

A format of sending the first information is not limited in this solution.

In an implementation, the first information includes the measurement and reporting configuration information of the first access stratum data set.

In an implementation, the first information needs to include one or more of the following information: information indicating an artificial intelligence AI function corresponding to access stratum data (where the AI function may include, but is not limited to, one or more functions of CSI compression, CSI prediction, BM, and positioning), information about a target frequency measured by the UE, information about a reference signal type measured by the UE (indicating, for example, an SSB and/or CSI), information about a channel quality type measured by the UE (for example, RSRP/RSRQ/an SINR), indication information collected and reported by a physical layer L1 and/or a network layer L3 of the UE, information about a scenario in which access stratum data needs to be collected (for example, a specific region, a cell, or cell configuration), and information about a maximum quantity of reported beams (indicating, for example, a measurement result of four/six/several beams).

In addition, as shown in Table 1, the first information may indicate an AS data collection requirement for each event (event) ID, or may indicate wholly or partially the same AS data collection requirements for a group of event IDs.

**Table 1**

| | |
|---|---|
| Sub-information group 1 | Event IDs xx to yy |
| Sub-information group 2 | Event ID zz |
| Sub-information 1 | Event IDs aa to bb |
| Sub-information 2 | Event ID cc |

In an implementation, the first information further includes first identifier ID information and/or second ID information. The first ID information indicates an ID of an event or an event group corresponding to each access stratum data group. The second ID information may also be understood as source ECAF indication information of a data collection requirement, and indicates an ID of an ECAF corresponding to each access stratum data group.

In addition, the first information may further include one or both of indication information of corresponding AS data used by the ECAF to perform model training and function information corresponding to model training.

In S640, the network device sends the third information to the DCAF, where the third information indicates the data that is in the first access stratum data set and that is accepted by the network device and/or the data that is not accepted by the network device.

The network device provides a feedback (that is, sends the third information) to the DCAF based on an AS measurement requirement received in step S630.

In an implementation, the third information further indicates an ID of an event or an event group accepted or not accepted by the network device, or the third information indicates an ID of sub-access stratum data accepted or not accepted by the network device.

In an implementation, the third information further indicates a reason why the network device accepts or does not accept specific access stratum data (for example, permission constraints or insufficient measurement resources).

It should be understood that the DCAF may learn, based on the third information, that the second access stratum data set is accepted by the network device.

In S650, the DCAF sends the third information to the ECAF.

The DCAF may further feed back, based on a feedback result received in S640, a result of accepting an AS data measurement request by the network device to the ECAF that subscribes to a corresponding event (group).

In S660, the network device sends the first indication information to the AS stratum of the UE, where the first indication information indicates that the AS stratum of the UE is to measure the second access stratum data set.

It should be understood that the second access stratum data set includes all or a part of access stratum data in the first access stratum data set, or the second access stratum data set is a subset of the first access stratum data set.

In an implementation, the second access stratum data set includes access stratum data that is in the first access stratum data set and that is accepted by the network device.

In an implementation, the first indication information includes measurement and reporting configuration information of the second access stratum data set.

In an implementation, based on the first indication information, the network device may indicate, to the UE, a measurement requirement that is in the second access stratum data set and that is an AS data collection request from the DCAF.

In an implementation, the first indication information further includes at least one of the following information: the first ID information, the second ID information, and AI model training function indication information. In other words, based on the first indication information, the network device may further indicate the ECAF, an event ID, and a model training function that correspond to the AS data collection request.

In S670, the AS stratum of the UE performs measurement. In S680, the AS stratum of the UE sends the second information to the network device, where the second information indicates the second access stratum data set. In S690, the network device sends the second information to the DCAF.

It should be understood that the AS stratum of the UE may measure access stratum data based on a measurement requirement indicated by the first indication information, and send a measurement result to the network device based on the second information, and then, the network device sends the measurement result to the DCAF. A manner of reporting the second information is not limited in this application. The second information may be reported based on a one-to-one correspondence between an event and an AS measurement result, or all AS measurement results may be directly reported, and the DCAF establishes a correspondence.

In S691, the DCAF stores the second access stratum data set.

After obtaining the measurement result and a correspondence between the measurement result and the event ID, the DCAF locally stores the measurement result and the correspondence.

In S692, the DCAF sends the second information to the ECAF.

Based on the subscription request information received by the DCAF in S610, the DCAF selects a measurement result (namely, the second access stratum data set) corresponding to a corresponding event ID, and sends the measurement result to the corresponding ECAF.

FIG. 7 shows a communication method 700 according to this application. AS data of UE is collected by using the method. The method in FIG. 7 includes at least a part of the following content.

S710: A PAF sends measurement and reporting configuration information of access stratum data to a DCAF.

S720: An ECAF (Event Consumer) sends subscription request information to the DCAF.

S730: The DCAF sends first information to a non-AS stratum of the UE, where the first information is used for requesting a first access stratum data set of the UE, and the first information includes measurement and reporting configuration information of the first access stratum data set.

S740: An AS stratum of the UE performs measurement.

S750: The non-AS stratum of the UE sends first request information to the AS stratum of the UE, where the first request information is used for requesting the first access stratum data set.

S760: The AS stratum of the UE sends second information to the non-AS stratum of the UE, where the second information indicates a second access stratum data set.

S770: The non-AS stratum of the UE sends the second information to the DCAF.

S780: The DCAF stores the second access stratum data set.

S790: The DCAF sends the second information to the ECAF.

According to the foregoing solution, the ECAF may send an AS stratum data collection requirement, which is needed for training a model by the ECAF, as subscription information to the DCAF, the DCAF sends the subscription information to the non-AS stratum of the UE, the non-AS stratum of the UE collects AS measurement data from the AS stratum of the UE and forwards the AS measurement data to the DCAF, and finally, the ECAF obtains a subscribed AS stratum data collection result from the DCAF, so that a procedure of collecting an AS stratum measurement result by the ECAF is completed.

The following describes S710 to S790 in detail.

For steps S710 and S720, refer to steps S610 and S620.

In S730, the DCAF sends the first information to the non-AS stratum of the UE, where the first information is used for requesting the first access stratum data set of the UE, or the first information indicates a measurement requirement for the first access stratum data set.

In this embodiment of this application, the non-AS stratum of the UE includes, but is not limited to, an application APP layer of the UE, a direct data collection client (Direct Data Collection Client, DDCC) of the UE, and an indirect data collection client (Indirect Data Collection Client, IDCC) of the UE.

It should be understood that the first access stratum data set is a set of access stratum data requested by at least one ECAF based on the subscription request information. The first access stratum data set includes at least one access stratum data group, and each access stratum data group includes at least one piece of sub-access stratum data.

The DCAF identifies measurement and reporting configuration related to AS data collection based on measurement and reporting configuration obtained in step S710, and sends, to the network device, the measurement and reporting configuration related to AS data collection. A format of sending the first information is not limited in this solution.

In an implementation, the first information includes the measurement and reporting configuration information of the first access stratum data set.

In an implementation, the first information needs to include one or more of the following information: information indicating an artificial intelligence AI function corresponding to access stratum data (where the AI function may include, but is not limited to, one or more functions of CSI compression, CSI prediction, BM, and positioning), information about a target frequency measured by the UE, information about a reference signal type measured by the UE (indicating, for example, an SSB and/or CSI), information about a channel quality type measured by the UE (for example, RSRP/RSRQ/an SINR), indication information collected and reported by a physical layer L1 and/or a network layer L3 of the UE, information about a scenario in which access stratum data needs to be collected (for example, a specific region, a cell, or cell configuration), and information about a maximum quantity of reported beams (indicating, for example, a measurement result of four/six/several beams).

In addition, similar to Table 1, the first information may indicate an AS data collection requirement for each event (event) ID, or may indicate wholly or partially the same AS data collection requirements for a group of event IDs.

In an implementation, the first information further includes first identifier ID information and/or second ID information. The first ID information indicates an ID of an event or an event group corresponding to each access stratum data group. The second ID information may also be understood as source ECAF indication information of a data collection requirement, and indicates an ID of an ECAF corresponding to each access stratum data group.

In addition, the first information may further include one or both of indication information of corresponding AS data used by the ECAF to perform model training and function information corresponding to model training.

In S740, the AS stratum of the UE performs measurement.

In this step, the AS stratum of the UE performs measurement based on configuration obtained from a network side. It should be noted that measurement performed by the UE herein does not follow a strict sequence with other steps, that is, measurement is independently performed by the UE, and is not affected by the data collection request received by the non-AS stratum of the UE.

In S750, the non-AS stratum of the UE sends the first request information to the AS stratum of the UE, where the first request information is used for requesting the first access stratum data set.

In an implementation, the first request information includes measurement and reporting configuration information of the second access stratum data set.

In an implementation, the first request information further includes at least one of the following information: the first ID information, the second ID information, and AI model training function indication information. In other words, based on the first request information, the network device may further indicate the ECAF, an event ID, and a model training function that correspond to the AS data collection request.

In S760, the AS stratum of the UE sends the second information to the non-AS stratum of the UE, where the second information indicates the second access stratum data set.

Based on an AS data collection requirement received by using the first request information in step S750, the AS stratum of the UE may select a corresponding AS measurement result and directly send the AS measurement result to the non-AS stratum, or may choose to further determine and select a corresponding AS measurement result and send the AS measurement result to the non-AS stratum. In other words, the AS stratum of the UE may determine a part of the access stratum data in the first access stratum data set as the second access stratum data set, and send the second access stratum data set to the non-AS stratum of the UE based on the second information.

In an implementation, if the AS stratum cannot send a corresponding measurement result to the non-AS stratum as needed, the AS stratum may send reason indication information to the non-AS stratum. For example, there is no corresponding measurement result (where the AS stratum of the UE does not configure a corresponding measurement result or the corresponding measurement result has been deleted), or the AS stratum does not agree to send the corresponding measurement result to the non-AS stratum due to permission constraints. A granularity of the reason indication information may be indicated based on each measurement result that is not fed back, or may be indicated based on a model training function, an event ID, or an event consumer ID. For example, the UE does not feed back a corresponding AS measurement result for a CSI compression function, an event xx, or an event consumer yy.

It should be understood that the AS stratum of the UE may separately feed back an AS measurement result, or may separately feed back reason indication information that an AS measurement result is not sent, or may feed back both an AS measurement result that may be provided and reason indication information indicating that an AS measurement result cannot be sent.

In S770, the non-AS stratum of the UE sends the second information to the DCAF.

Specifically, the non-AS stratum of the UE may send the second information to the DCAF in any one of the following manners.

### Manner 1

In step S760, the AS stratum of the UE sends the second information to the APP layer in the non-AS stratum of the UE, and the APP layer sends the second information to the DDCC.

In step S770, the DDCC sends the second information to the DCAF.

### Manner 2

In step S760, the AS stratum of the UE sends the second information to the APP layer in the non-AS stratum of the UE, and the APP layer sends the second information to the indirect data collection client IDCC.

In step S770, the IDCC sends the second information to the DCAF.

### Manner 3

In step S760, the AS stratum of the UE sends the second information to the DDCC in the non-AS stratum of the UE.

In step S770, the DDCC sends the second information to the DCAF.

### Manner 4

In step S760, the AS stratum of the UE sends the second information to the IDCC in the non-AS stratum of the UE.

In step S770, the IDCC sends the second information to the DCAF.

For S780 and S790, refer to steps S691 and S692.

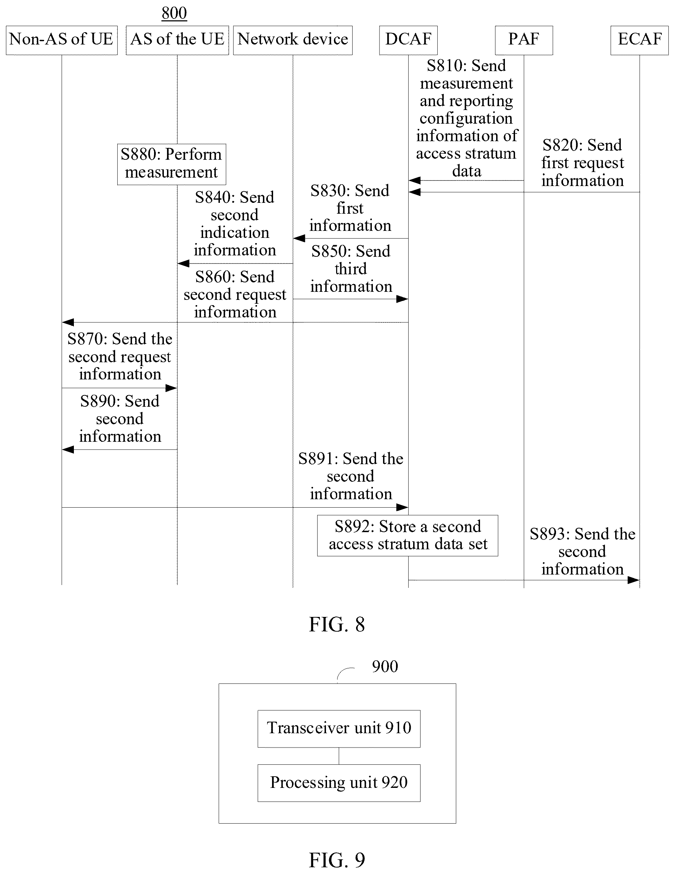

FIG. 8 shows a data collection method 800 according to this application. AS data of UE is collected by using the method. The method in FIG. 8 includes at least a part of the following content.

S810: A PAF sends measurement and reporting configuration information of access stratum data to a DCAF.

S820: An ECAF (Event Consumer) sends subscription request information to the DCAF.

S830: The DCAF sends first information to a network device, where the first information is used for requesting a first access stratum data set of the UE.

S840: The network device sends second indication information to an AS stratum of the UE, where the second indication information indicates measurement and reporting configuration of the first access stratum data set.

S850: The network device sends third information to the DCAF, where the third information indicates data that is in the first access stratum data set and that is accepted by the network device and/or data that is not accepted by the network device.

S860: The DCAF sends second request information to a non-AS stratum of the UE, where the second request information is used for requesting a third access stratum data set of the UE, and the third access stratum data set is data accepted by the network device.

S870: The non-AS stratum of the UE sends the second request information to the AS stratum of the UE.

S880: The AS stratum of the UE performs measurement.

S890: The AS stratum of the UE sends second information to the non-AS stratum of the UE, where the second information indicates a second access stratum data set.

S891: The non-AS stratum of the UE sends the second information to the DCAF.

S892: The DCAF stores the second access stratum data set.

S893: The DCAF sends the second information to the ECAF.

According to the foregoing solution, the event consumer may send an AS stratum data collection requirement, which is needed for training a model by the event consumer, as subscription information to the DCAF, the DCAF first sends the subscription information to an operator device, and then the operator device sends the subscription information to the AS stratum of the UE, and in this process, additionally instructs the AS stratum of the UE to report a corresponding measurement result and still retains the measurement result, so that a data volume of AS measurement results that can be obtained by the non-AS stratum of the UE is increased.

The following describes S810 to S893 in detail.

For steps S810 to S830, refer to steps S610 to S630.

In S840, the network device sends the second indication information to the AS stratum of the UE, where the second indication information indicates the measurement and reporting configuration of the first access stratum data set.

Optionally, because the network device accepts only a part (namely, the third access stratum data set) of the data in the first access stratum data set, the network device may send measurement and reporting configuration of the third access stratum data set only to the AS stratum of the UE.

The network device may send additional AS measurement configuration to the AS stratum of the UE based on the second indication information, to meet the AS data collection requirement obtained from the DCAF in step S830.

In addition, in the conventional technology, after reporting a measurement result, the AS stratum of the UE deletes the corresponding measurement result from a local storage of the UE. To ensure that the non-AS stratum of the UE can obtain sufficient data collection results, the network device may choose, based on the second indication information, to further indicate a measurement item that needs to be retained locally by the UE even after being reported, so that the measurement results can be transferred to the non-AS stratum of the UE subsequently.

In addition, the network device may further instruct, based on the second indication information, the UE to locally retain related configuration of the measurement results.

For example, the network device may instruct the UE to retain duration of some measurement results.

For another example, the network device may instruct the UE to retain measurement results of some measurement items in one or more time periods.

For another example, the network device may instruct the UE to retain a measurement result in specific configuration, for example, a specific target frequency, a specific reference signal type, or a specific channel quality type measured by the UE.

For step S850, refer to step S640. It should be understood that the DCAF may learn, based on the third information, that the third access stratum data set is accepted by the network device, and the third access stratum data set includes all or a part of data in the first access stratum data set.

In S860, the DCAF sends the second request information to the non-AS stratum of the UE, where the second request information is used for requesting the third access stratum data set of the UE, and the third access stratum data set is data accepted by the network device.

In an implementation, the second request information includes measurement and reporting configuration information of the third access stratum data set.

In an implementation, the second request information further includes at least one of the following information: the first ID information, the second ID information, and AI model training function indication information. In other words, based on the second request information, the network device may further indicate the ECAF, an event ID, and a model training function that correspond to an AS data collection request.

For step S870, refer to step S750.

For step S880, refer to step S740.

For steps S890 to S893, refer to steps S760 to S790.

FIG. 9 is a block diagram of a communication apparatus 900 according to an embodiment of this application. The apparatus 900 includes a transceiver unit 910 and a processing unit 920. The transceiver unit 910 may communicate with the outside, and the processing unit 920 is configured to process data. The transceiver unit 910 may also be referred to as a communication interface or a communication unit.

In a possible implementation, the apparatus 900 may further include a storage unit. The storage unit may be configured to store instructions and/or data. The processing unit 920 may read the instructions and/or the data in the storage unit.

The apparatus 900 may be configured to perform actions performed by the network device in the foregoing method embodiments. In this case, the apparatus 900 may be a network device or a component that may be disposed in the network device. The transceiver unit 910 is configured to perform receiving and sending-related operations of the network device in the foregoing method embodiments. The processing unit 920 is configured to perform processing-related operations of the network device in the foregoing method embodiments.

Alternatively, the apparatus 900 may be configured to perform actions performed by the terminal device in the foregoing method embodiments. In this case, the apparatus 900 may be a terminal device or a component that may be disposed in the terminal device. The transceiver unit 910 is configured to perform receiving and sending-related operations on a terminal device side in the foregoing method embodiments. The processing unit 920 is configured to perform processing-related operations on the terminal device side in the foregoing method embodiments.

Alternatively, the apparatus 900 may be configured to perform actions performed by the application layer network element in the foregoing method embodiments. In this case, the apparatus 900 may be an application layer network element or a component that may be disposed in the application layer network element. The transceiver unit 910 is configured to perform receiving and sending-related operations of the application layer network element in the foregoing method embodiments. The processing unit 920 is configured to perform processing-related operations of the application layer network element in the foregoing method embodiments.

It should be further understood that the apparatus 900 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described function. In an optional example, a person skilled in the art may understand that the apparatus 900 may be specifically the network device, the terminal device, or the application layer network element in the foregoing embodiments, and may be configured to perform procedures and/or steps corresponding to the network device, the terminal device, or the application layer network element in the foregoing method embodiments; or the apparatus 900 may be specifically the network device, the terminal device, or the application layer network element in the foregoing embodiments, and may be configured to perform procedures and/or steps corresponding to the network device, the terminal device, or the application layer network element in the foregoing method embodiments. To avoid repetition, details are not described herein again.

The apparatus 900 in the foregoing solutions has functions of implementing corresponding steps performed by the network device, the terminal device, or the application layer network element in the foregoing methods. The functions may be implemented by hardware, or may be implemented by hardware executing corresponding software. The hardware or the software includes one or more modules corresponding to the foregoing functions. For example, the transceiver unit may be replaced with a transceiver machine (for example, a sending unit in the transceiver unit may be replaced with a transmitter machine, and a receiving unit in the transceiver unit may be replaced with a receiver machine), and another unit, for example, the processing unit, may be replaced with a processor, to separately perform receiving and sending operations and related processing operations in the method embodiments.

In addition, the transceiver unit 910 may alternatively be a transceiver circuit (where for example, the transceiver circuit may include a receiver circuit and a transmitter circuit), and the processing unit may be a processing circuit.

It should be noted that the apparatus in FIG. 9 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

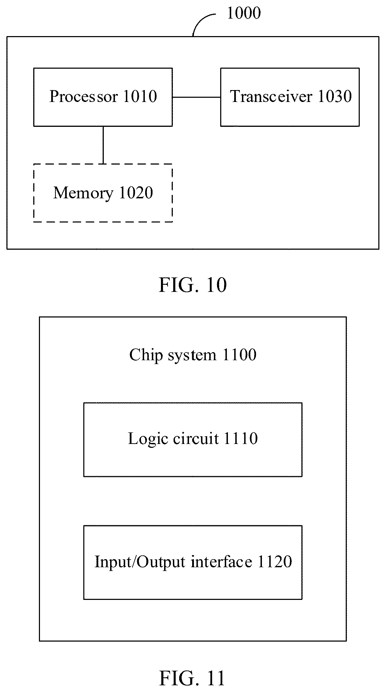

As shown in FIG. 10, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method in the foregoing method embodiments is performed.

In a possible implementation, the communication apparatus 1000 includes one or more processors 1010.

In a possible implementation, as shown in FIG. 8, the communication apparatus 1000 may further include the memory 1020.

In a possible implementation, the communication apparatus 1000 may include one or more storages 1020.

In a possible implementation, the memory 1020 and the processor 1010 may be integrated together or disposed separately, or the processor 1020 may be located outside the communication apparatus 1000.

In a possible implementation, as shown in FIG. 8, the wireless communication apparatus 1000 may further include a transceiver 1030. The transceiver 1030 is configured to receive and/or send a signal. For example, the processor 1010 is configured to control the transceiver 1030 to receive and/or send the signal.

In a solution, the communication apparatus 1000 is configured to implement operations performed by the network device in the foregoing method embodiments.

For example, the processor 1010 is configured to implement processing-related operations performed by the network device in the foregoing method embodiments, and the transceiver 1030 is configured to implement receiving and sending-related operations performed by the network device in the foregoing method embodiments.

In another solution, the communication apparatus 1000 is configured to implement operations performed by the terminal device in the foregoing method embodiments.

For example, the processor 1010 is configured to implement processing-related operations performed by the terminal device in the foregoing method embodiments, and the transceiver 1030 is configured to implement receiving and sending-related operations performed by the terminal device in the foregoing method embodiments.

In another solution, the communication apparatus 1000 is configured to implement operations performed by the application layer network element in the foregoing method embodiments.

For example, the processor 1010 is configured to implement processing-related operations performed by the application layer network element in the foregoing method embodiments, and the transceiver 1030 is configured to implement receiving and sending-related operations performed by the application layer network element in the foregoing method embodiments.

As shown in FIG. 11, an embodiment of this application provides a chip system 1100. The chip system 1100 (or may also be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, to cause the chip system 1100 to implement the methods and functions in embodiments of this application. The input/output interface 1120 may be an input/output circuit in the chip system 1100, and outputs information processed by the chip system 1100, or inputs to-be-processed data or signaling information into the chip system 1100 for processing.

In a solution, the chip system 1100 is configured to implement operations performed by the network device, the terminal device, or the application layer network element in the foregoing method embodiments.

For example, the logic circuit 1110 is configured to implement processing-related operations performed by the network device in the foregoing method embodiments, and the input/output interface 1120 is configured to implement sending and/or receiving-related operations performed by the network device in the foregoing method embodiments.

An embodiment of this application further provides a computer-readable storage medium. The computer-readable storage medium stores computer instructions for implementing the method performed by the terminal device or the method performed by the satellite in the foregoing method embodiments.

For example, when the computer program is executed by a computer, the computer is caused to implement the method performed by the terminal device, the method performed by the network device, or the method performed by the application layer network element in the foregoing method embodiments.

An embodiment of this application further provides a computer program product including instructions. When the instructions are executed by a computer, the computer is caused to implement the method performed by the network device, the method performed by the terminal device, or the method performed by the application layer network element in the foregoing method embodiments.

An embodiment of this application further provides a communication system. The communication system includes one or more of the network device, the terminal device, or the application layer network element in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the execution body of the method provided in embodiments of this application may be a terminal device or a satellite, or may be a functional module that is in the terminal device or the satellite and that can invoke and execute the program.

Aspects or features in embodiments of this application may be implemented as a method, an apparatus, or a product that uses standard programming and/or engineering technologies. As used herein, the term "product" may encompass a computer program accessible from any computer-readable device, carrier, or medium. For example, a computer-readable medium may include, but is not limited to: a magnetic storage device (for example, a hard disk drive, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include, but is not limited to: radio channels and various other media capable of storing, including, and/or carrying instructions and/or data.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the storage mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (storage module) may be integrated into the processor.

It should further be noted that the storage described herein is intended to include, but is not limited to, these and any other appropriate type of storage.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or a part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A data collection method, comprising:
sending, by a data collection application function network element, first information to a network device or a non-access stratum of a terminal device, wherein the first information is used for requesting a first access stratum data set of the terminal device, the first information comprises measurement and reporting configuration information of the first access stratum data set, and the first access stratum data set comprises access stratum data that an event consumer application function network element requests to obtain;
receiving, by the data collection application function network element, second information, wherein the second information indicates a second access stratum data set, and the second access stratum data set comprises all or a part of access stratum data in the first access stratum data set; and
sending, by the data collection application function network element, the second information to the event consumer application function network element.

2. The method according to claim 1, wherein the method further comprises:
receiving, by the data collection application network element, third information from the network device, wherein the third information indicates data that is in the first access stratum data set and that is accepted by the network device and/or data that is not accepted by the network device.

3. The method according to claim 1 or 2, wherein that the first access stratum data set comprises the access stratum data that the event consumer application function network element requests to obtain comprises:
the first access stratum data set comprises access stratum data corresponding to at least one event group subscribed to by the event consumer application function network element, each of the at least one event group corresponds to a part of the access stratum data in the first access stratum data set, and the event group comprises at least one event; and
the first information further comprises first identifier ID information and/or second ID information, the first ID information indicates an ID of each of the at least one event group, and the second ID information indicates an ID of the event consumer application function network element.

4. The method according to claim 2 or 3, wherein that the third information indicates the data that is in the first access stratum data set and that is accepted by the network device and/or the data that is not accepted by the network device comprises:
the third information indicates an ID of an event group accepted or not accepted by the network device, or the third information indicates an ID of sub-access stratum data accepted or not accepted by the network device.

5. The method according to claim 2 or 4, wherein the method further comprises:
the third information further indicates a reason why the network device accepts or does not accept specific access stratum data.

6. The method according to any one of claims 1 to 5, wherein the method further comprises:
receiving, by the data collection application function network element, fourth information from a provisioning application function network element, wherein the fourth information comprises the measurement and reporting configuration information of the first access stratum data set.

7. The method according to claim 2, 4, or 5, wherein the method further comprises:
sending, by the data collection application function network element, the third information to the event consumer application function network element.

8. The method according to any one of claims 1 to 7, wherein the method further comprises:
storing, by the data collection application function network element, the second access stratum data set based on the second information.

9. A data collection method, comprising:
receiving, by a network device, first information from a data collection application function network element, wherein the first information is used for requesting a first access stratum data set of a terminal device, the first information comprises measurement and reporting configuration information of the first access stratum data set, and the first access stratum data set comprises access stratum data that an event consumer application function network element requests to obtain;
sending, by the network device, first indication information to an access stratum of the terminal device, wherein the first indication information indicates that the access stratum of the terminal device is to measure a second access stratum data set, the second access stratum data set comprises all or a part of access stratum data in the first access stratum data set, and the first indication information comprises configuration and reporting information of the second access stratum data set;
receiving, by the network device, second information from the access stratum of the terminal device, wherein the second information indicates the second access stratum data set; and
sending, by the network device, the second information to the data collection application function network element.

10. The method according to claim 9, wherein the method further comprises:
sending, by the network device, third information to the data collection application function network element, wherein the third information indicates data that is in the first access stratum data set and that is accepted by the network device and/or data that is not accepted by the network device.

11. The method according to claim 10, wherein the second access stratum data set comprises access stratum data that is in the first access stratum data set and that is accepted by the network device.

12. The method according to any one of claims 9 to 11, wherein that the first access stratum data set comprises the access stratum data that the event consumer application function network element requests to obtain comprises:
the first access stratum data set comprises access stratum data corresponding to at least one event group subscribed to by the event consumer application function network element, each of the at least one event group corresponds to a part of the access stratum data in the first access stratum data set, and the event group comprises at least one event; and
the first information further comprises first identifier ID information and/or second ID information, the first ID information indicates an ID of each of the at least one event group, and the second ID information indicates an ID of the event consumer application function network element.

13. The method according to any one of claims 10 to 12, wherein that the third information indicates the data that is in the first access stratum data set and that is accepted by the network device and/or the data that is not accepted by the network device comprises:
the third information indicates an ID of an event group accepted or not accepted by the network device, or the third information indicates an ID of sub-access stratum data accepted or not accepted by the network device; and
the third information further indicates a reason why the network device accepts or does not accept specific access stratum data.

14. The method according to any one of claims 9 to 13, wherein the method further comprises:
sending, by the network device, second indication information to the access stratum of the terminal device, wherein the second indication information comprises the measurement and reporting configuration information of the first access stratum data set.

15. The method according to any one of claims 9 to 14, wherein the first indication information further indicates that a measurement requirement for the second access stratum data set is from the data collection application function network element.

16. The method according to any one of claims 9 to 15, wherein the first indication information further comprises at least one of the following information: the first ID information, the second ID information, and AI model training function indication information.

17. A data collection method, comprising:
receiving, by a non-access stratum of a terminal device, first information from a data collection application function network element, wherein the first information is used for requesting a first access stratum data set of the terminal device, the first information comprises measurement and reporting configuration information of the first access stratum data set, and the first access stratum data set comprises access stratum data that an event consumer application function network element requests to obtain;
sending, by the non-access stratum of the terminal device, first request information to an access stratum of the terminal device, wherein the first request information is used for requesting the first access stratum data set;
sending, by the access stratum of the terminal device, second information to the non-access stratum of the terminal device, wherein the second information indicates a second access stratum data set, and the second access stratum data set comprises all or a part of access stratum data in the first access stratum data set; and
sending, by the non-access stratum of the terminal device, the second information to the data collection application function network element.

18. The method according to claim 17, wherein the second access stratum data set comprises a part of the access stratum data in the first access stratum data set, and the method further comprises:
determining, by the access stratum of the terminal device, not to send access stratum data in the first access stratum data set other than the second access stratum data set to the non-access stratum of the terminal device.

19. The method according to claim 17 or 18, wherein the method further comprises:
sending, by the access stratum of the terminal device, reason indication information to the non-access stratum of the terminal device, wherein the reason indication information indicates a reason why the access stratum of the terminal device does not send the first access stratum data set to the non-access stratum of the terminal device.

20. The method according to any one of claims 17 to 19, wherein that the first access stratum data set comprises the access stratum data that the event consumer application function network element requests to obtain comprises:
the first access stratum data set comprises access stratum data corresponding to at least one event group subscribed to by the event consumer application function network element, each of the at least one event group corresponds to a part of the access stratum data in the first access stratum data set, and the event group comprises at least one event; and
the first information further comprises first identifier ID information and/or second ID information, the first ID information indicates an ID of each of the at least one event group, and the second ID information indicates an ID of the event consumer application function network element.

21. The method according to any one of claims 17 to 20, wherein the first request information further comprises at least one of the following information: the first ID information, the second ID information, and AI model training function indication information.

22. The method according to any one of claims 19 to 21, wherein the method further comprises:
sending, by the non-access stratum of the terminal device, the reason indication information to the data collection application function network element.

23. The method according to any one of claims 17 to 22, wherein the method further comprises:
receiving, by the access stratum of the terminal device, second indication information from a network device, wherein the second indication information comprises the measurement and reporting configuration information of the first access stratum data set.

24. A communication apparatus, comprising:
a unit configured to implement the method according to any one of claims 1 to 8, or a unit configured to implement the method according to any one of claims 9 to 16, or a unit configured to implement the method according to any one of claims 17 to 23.

25. A computer program product, wherein the computer program product comprises computer program code, and when the computer program code is run, an apparatus is caused to perform
the method according to any one of claims 1 to 8, or
the method according to any one of claims 9 to 16, or
the method according to any one of claims 17 to 23.

26. A computer-readable storage medium, wherein the computer-readable storage medium stores a computer program, and when the computer program is run,
an apparatus is caused to perform the method according to any one of claims 1 to 8; or
an apparatus is caused to perform the method according to any one of claims 9 to 16; or
an apparatus is caused to perform the method according to any one of claims 17 to 23.

27. A chip system, comprising a processor, configured to invoke a computer program from a storage and run the computer program,
to cause a communication apparatus on which the chip system is installed to perform the method according to any one of claims 1 to 8; or
to cause a communication apparatus on which the chip system is installed to perform the method according to any one of claims 9 to 16; or
to cause a communication apparatus on which the chip system is installed to perform the method according to any one of claims 17 to 23.

28. A communication system, comprising a terminal device, a network device, and a data collection application function network element, wherein the terminal device is configured to perform the method according to any one of claims 17 to 23, the network device is configured to perform the method according to any one of claims 9 to 16, and the data collection application function network element is configured to perform the method according to any one of claims 1 to 8.
